# EUROPEAN PATENT APPLICATION

(11) **EP 4 799 871 A1**
(43) Date of publication of application: **02.09.2026**
(21) Application number: 24882176.1
(22) Date of filing: 09.10.2024
(51) Int. Cl.: B60R 21/205, B60R 21/231

(54) **OCCUPANT RESTRAINT STRUCTURE**

(30) Priority: 25.10.2023 JP 2023183535
(71) Applicant: AUTOLIV DEVELOPMENT AB, 44783 Vargarda (JP)
(72) Inventor: KAMINAGA Nobuyuki, Yokohama-shi, Kanagawa 222-8580 (JP); NAKAJIMA Yutaka, Yokohama-shi, Kanagawa 222-8580 (JP); ISAKA Yumi, Yokohama-shi, Kanagawa 222-8580 (JP)
(74) Representative: Feucker, Max Martin
(86) International application number: PCT/JP2024/036061
(87) International publication number: WO 2025/089060

(57) **Abstract**

To provide an occupant protection structure that can obtain a reaction force surface that can properly and sufficiently retain the airbag cushion when fully expanded, even when the instrument panel is reduced in size. An occupant restraint structure 100 is stowed in an instrument panel 2 to protect an occupant P, and includes an airbag cushion 10 that expands and deploys toward the occupant P from an opening 41 formed on an upper side of instrument panel 2, and an airbag cushion 20 that expands and deploys toward the occupant P from an opening 42 formed on a lower side of instrument panel 2. Furthermore, in this occupant restraint structure 100, the relationship expressed as L2u ≧ Lib...(1) is satisfied when the occupant restraint structure expands and deploys. Here, L2u indicates the level of the upper end 20u of the airbag cushion 20, and Lib indicates the level of the back end 2b of the instrument panel 2.

## Description

### TECHNICAL FIELD

The present invention relates to an occupant restraint structure equipped with an airbag cushion that expands and deploys toward an occupant inside the vehicle cabin during a vehicle emergency.

### BACKGROUND ART

As an example of this type of airbag cushion, Patent Document 1 proposes an occupant protection device that combines a passenger-side airbag and a knee bag, which expand and deploy from the instrument panel to the front of the upper body and front of the leg part, respectively, by gas ejection from an inflator. With this device, when the passenger-side airbag and knee bag are fully expanded, the upper end part of the knee bag is positioned at least 50 mm above the lower end part of the passenger-side airbag. As a result, the lower end part of the passenger-side airbag fits between the upper end part of the expanded knee bag and the occupant, suppressing the retraction of the passenger-side airbag. Consequently, the forward movement of the waist of the occupant is suppressed, ensuring sufficient protection for the occupant during a vehicle collision.

### RELATED ART DOCUMENTS

### PATENT DOCUMENTS

Patent Document 1: JP 2003-034215A

### SUMMARY OF THE INVENTION

### PROBLEM TO BE SOLVED BY THE INVENTION

Incidentally, conventional instrument panels are usually provided in front of the vehicle seats where the occupants sit, and the vehicle seats themselves are semi-fixed, only allowing for forward and backward movement so that the occupants face forward in the direction of travel. For this reason, various devices and much equipment have to be accommodated in the instrument panel, so the shape and volume thereof have become large. As a result, when the airbag cushion for an occupant, particularly the passenger-side airbag cushion, expanded and deployed during a vehicle emergency, the instrument panel, especially the upper surface thereof, functioned as a portion of the reaction force surface that retains the airbag cushion in place.

On the other hand, as technologies such as autonomous driving advance in the future, the degree of freedom of movement of vehicle seats is likely to increase, resulting in a more spacious and flexible vehicle cabin. Consequently, there is a strong possibility that the shape and volume of the instrument panel will be reduced. As a result, the upper surface of the instrument panel, which conventionally functioned as part of the reaction force surface of the airbag cushion, could also be narrowed, making a new structure that appropriately and sufficiently retains the airbag cushion highly desirable. However, even if the conventional airbag cushion configuration described above is used to meet such requirements, the lower end part of the passenger-side airbag will be positioned between the upper end part of the knee bag and the occupant, so the downward support of the passenger-side airbag will effectively be provided primarily by the leg part of the occupant. Accordingly, with a conventional airbag cushion configuration, in the case the instrument panel 2 is reduced in size, a situation arises in which a reaction surface for appropriately and sufficiently retaining a front-passenger airbag cannot be obtained, and there is a risk that progress in autonomous driving and the like cannot be accommodated.

Therefore, in light of the circumstances described above, an object of the present disclosure is to provide an occupant restraint (protection) structure that can obtain a reaction force surface capable of appropriately and sufficiently retaining the airbag cushion when fully expanded, even if the instrument panel is reduced in size due to future advancements such as autonomous driving.

### MEANS FOR SOLVING THE PROBLEM

In order to resolve the problem described above, an occupant restraint structure according to an example of the present disclosure is an occupant restraint structure stowed (in a normal state) in an instrument panel installed on a front side in a vehicle cabin in order to protect an occupant in the vehicle cabin, the occupant restraint structure including a first airbag cushion that expands and deploys (in a vehicle emergency) toward the occupant from a first opening part formed on an upper side of the instrument panel, and a second airbag cushion that expands and deploys toward the occupant from a second opening part formed on a lower side of the instrument panel.

Furthermore, in this occupant restraint structure, the following relationship is satisfied when the occupant restraint structure expands and deploys. $L 2 u ≧ Lib$ Here, L2u indicates the upper end level of the second airbag cushion, and Lib indicates the back-end level of the instrument panel.

In this configuration, the first airbag cushion can expand and deploy from above the instrument panel toward a relatively upper part of the occupant (for example, a part including the head part and/or upper body part). On the other hand, the second airbag cushion can expand and deploy from below the instrument panel toward a relatively lower part of the occupant (for example, a part including the leg part). At this time, the first and second airbag cushions expand and deploy so that the upper end of the second airbag cushion is higher than the back end of the instrument panel. Therefore, when the first airbag cushion expands and deploys towards the upper part of the occupant, the lower surface of the first airbag cushion can be more readily retained by the upper surface of the second airbag cushion. Therefore, even if the shape and volume of the instrument panel housing the first and second airbag cushion are reduced, the upper surface of the second airbag cushion when fully expanded can function as a reaction surface that appropriately and sufficiently retains the first airbag cushion when fully expanded. In other words, according to the configuration of the present disclosure, when the first and second airbag cushion expand and deploy, the lower surface of the first airbag cushion is reliably retained by at least a part of the upper surface of the instrument panel and at least a part of the upper surface of the second airbag cushion.

As a result, the safety of occupants during autonomous driving and the like can be sufficiently ensured, and this can contribute to the development of future vehicle configurations and driving regulations. In addition, in that process, the second airbag cushion is prevented from being crushed by the first airbag cushion. Accordingly, the second airbag cushion facilitates optimization of expansion volume and shape of the first airbag cushion, and also enables reducing the capacity of the airbag cushion. Furthermore, since the restraint force on the occupant by the first and second airbag cushions can be improved, the amount of movement of various parts of the occupant's body can be suitably suppressed, thereby contributing to improved safety.

### BRIEF DESCRIPTION OF THE DRAWINGS

FIG. 1 is a schematic side view depicting the state of the airbag cushion in normal conditions, along with the instrument panel and the occupant, relating to an occupant restraint structure according to an embodiment of the present disclosure;
FIG. 2 is a schematic side view depicting the state of the airbag cushion when expanded and deployed, along with the instrument panel and the occupant, relating to the occupant restraint structure according to an embodiment of the present disclosure; and
FIG. 3 is a schematic side view depicting the state of the airbag cushion when expanded and deployed, along with the instrument panel and the occupant, relating to the occupant restraint structure according to another embodiment of the present disclosure.

### EMBODIMENTS OF THE INVENTION

### Definition of Terms and Overview of Embodiments

A preferred embodiment of the occupant restraint structure according to the present invention will be described below with reference to the attached drawings. Note that in the present document, up and down, left and right, and front and back are defined as follows. In other words, when an occupant P is seated in a normal orientation on a vehicle seat S having a backrest S1 and a seat surface S2, the direction the occupant P is facing is called the front Df, the opposite direction is called the back Db, and when both of these directions (coordinate axis) are indicated, they are referred to as the front-back direction. In addition, when the occupant P is seated in the vehicle seat S in a normal orientation, the right side of occupant P is referred to as the right direction, and the left side of occupant P is referred to as the left direction. When referring to both of these directions (coordinate axis), they are referred to as the left-right direction. Similarly, when an occupant P is seated in a vehicle seat S in a normal orientation, the direction of the head part of the occupant P is referred to as up Du, and the direction of the waist part of the occupant P is referred to as down Dd. When referring to both of these directions (coordinate axis), they are referred to as the "up-down direction".

Furthermore, "occupant" in the present document is an occupant/passenger in accordance with a frontal collision test dummy (Hybrid III AM50; human body dummy for frontal collision test set forth in specification [49CFR Part 572 Subpart E and 0] of NHTSA [National Highway Traffic Safety Association]) with a physique equivalent to the average male in the United States, having an approximate size of 175 cm height, 88 cm sitting height, and 78 kg weight. Furthermore, "expanded and deployed" refers to the time from the start of expansion to the completion of expansion of each airbag cushion, "level" refers to the height position in the up-down direction, and "end part" refers to the surrounding area including at least the "end".

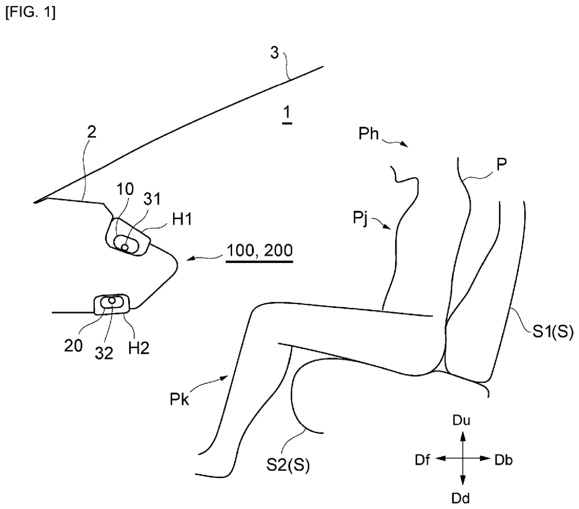

First, FIG. 1 is a schematic side view depicting, with respect to occupant restraint structures 100 and 200 according to an embodiment of the present disclosure, states of airbag cushions 10 and 20 in a normal state, together with an instrument panel 2 and an occupant P. As depicted in FIG. 1, the occupant restraint structure 100 according to the present embodiment includes airbag cushions 10 and 20 that expand and deploy in the event of a vehicle emergency, extending from the instrument panel 2 located at the front Df inside the vehicle cabin 1 toward the occupant P (for example, the passenger in the front passenger seat). The airbag cushions 10 and 20 are normally folded or rolled up and stowed in the housings H1 and H2 of the instrument panel 2, respectively.

In the event of a vehicle emergency, the airbag cushion 10 (first airbag cushion) receives gas from an inflator 31 and protrudes diagonally up Du on the inside of a windshield 3 (front glass) (inside the vehicle cabin 1). As a result, the airbag cushion 10 expands and deploys toward an upper part of the occupant P (for example, the part including the head part Ph and/or the upper body part Pj). On the other hand, in the event of a vehicle emergency, the airbag cushion 20 (second airbag cushion), receives gas supply from an inflator 32 and protrudes downward Dd on the inside of the windshield 3. As a result, the airbag cushion 20 expands and deploys toward the lower part of the occupant P (for example, the part including the leg parts Pk). Note that these phenomena will be described in detail in the descriptions of each embodiment below. In addition, "vehicle emergencies" include, for example, collisions with the vehicle front Df, overturning, and the like, but are not limited to these events.

### Embodiment 1

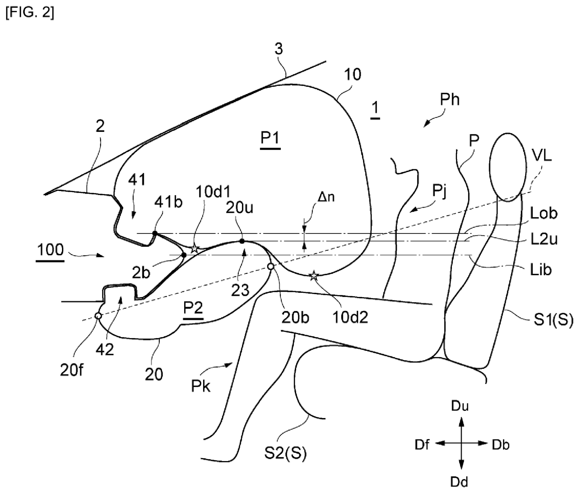

Next, FIG. 2 is a schematic side view depicting the state of the airbag cushions 10 and 20 when expanded and deployed, along with the instrument panel 2 and the occupant P, relating to the occupant restraint structure 100 according to an embodiment of the present disclosure. As depicted in FIG. 2, in the occupant restraint structure 100, the airbag cushions 10 and 20 expand and deploy from an opening 41 (first opening part) formed on an upper side of the instrument panel 2 and an opening 42 (second opening part) formed on a lower side of the instrument panel 2, respectively. Furthermore, the occupant restraint structure 100 is configured to satisfy the relationship depicted in the following equation (1) upon expansion and deployment. $L 2 u ≧ Lib$

Here, as depicted in the figure, L2u indicates the level of an upper end 20u of the airbag cushion 20, and Lib indicates the level of a back end 2b of the instrument panel 2. In other words, in the present embodiment, the airbag cushions 10 and 20 expand and deploy so that the height of the upper end 20u of the airbag cushion 20 is equal to or greater than the height of the back end 2b of the instrument panel 2.

With the occupant restraint structure 100 configured in this manner, the lower surface of the airbag cushion 10, which expands and deploys towards the upper part of the occupant P, is securely retained by the upper surface of the airbag cushion 20. Accordingly, even if the shape and volume of instrument panel 2 that normally houses airbag cushions 10 and 20 are reduced as compared with the conventional shape and volume, the upper surface of airbag cushion 20 when fully expanded can function as a reaction surface by which the airbag cushion 10 when fully expanded is appropriately and sufficiently retained.

### Embodiment 2

In addition, as depicted in FIG. 1, with the occupant restraint structure 100, a lower surface of airbag cushion 10 is retained by at least a part of the upper surface of the instrument panel 2 and at least a part of the upper surface of the airbag cushion 20. In this regard, the occupant restraint structure 100 enables the airbag cushion 10 to be retained more appropriately and reliably when fully expanded.

### Embodiment 3

Furthermore, as depicted in FIG. 1, the occupant restraint structure 100 is configured to satisfy the relationship expressed by the following equation (2) when expanded and deployed. $L 2 u = Lob \pm Δn$

Here, as depicted in the figure, Lob represents the level of a back end 41b of the opening 41, and Δn = |(Lob - L2u)|/2. Note that Δn is not limited to any specific numerical value, but is preferably around ±50 (mm).

With the occupant restraint structure 100 configured in this way, the upper surface of the airbag cushion 20 expands to a level closer to the back end 2b of the instrument panel 2, so that the lower surface of the airbag cushion 10 can be pushed further upward by the airbag cushion 20, thereby enabling the airbag cushion 10 to be retained more appropriately and securely when fully expanded.

### Embodiment 4

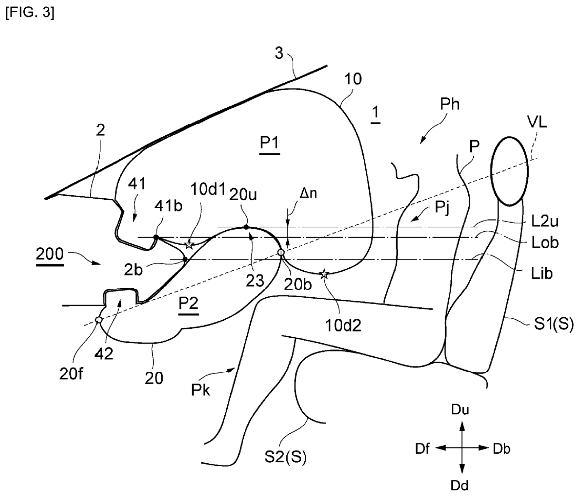

Next, FIG. 3 is a schematic side view depicting the state of the airbag cushions 10 and 20 when expanded and deployed, along with the instrument panel 2 and the occupant P, relating to the occupant restraint structure 200 according to another embodiment of the present disclosure.

As depicted in FIG. 3, the occupant restraint structure 200 is generally configured similarly to the occupant restraint structure 100 depicted in FIG. 2, except that the degree of expansion and deployment of the airbag cushions 10 and 20 is different. In other words, in the occupant restraint structure 200, the airbag cushions 10 and 20 expand and deploy from the upper opening 41 of the instrument panel 2 and the lower opening 42 of the instrument panel 2, respectively, toward the upper part and lower part of the occupant P. Furthermore, the occupant restraint structure 200 of Embodiment 4 is configured to satisfy the relationship depicted in the following equation (3) when expanded and deployed. For details on L2u and Lob, please refer to the descriptions for equations (1) and (2) above. $L 2 u ≧ Lob$

With the occupant restraint structure 200 configured in this manner, the airbag cushions 10 and 20 expand and deploy so that the height of the upper end 20u of the airbag cushion 20 is greater than or equal to the height of the back end 2b of the instrument panel 2. Therefore, the lower surface of the airbag cushion 10 can be pushed upward even further by the airbag cushion 20, thereby enabling the airbag cushion 10 to be retained more appropriately and securely when fully expanded.

### Embodiment 5

Here, as depicted in FIG. 2 and FIG. 3, each of occupant restraint structures 100 and 200 is configured such that, in an expanded and deployed state, upper end 20u of airbag cushion 20 comes into contact with the lower surface of the airbag cushion 10. With this configuration, the lower surface of the airbag cushion 10 can be supported over a wide area by the upper end part of the airbag cushion 20, thus making the airbag cushion 10 more stable and securely retained when fully expanded.

### Embodiment 6

In addition, as depicted in FIG. 2 and FIG. 3, in each expanded and deployed state of occupant restraint structures 100 and 200, a recessed part 23 whereby an upper end of the second airbag cushion 20 comes into contact so as to be embedded is defined in a part of the lower surface of the first airbag cushion 10. With this configuration, the lower surface of the airbag cushion 10 can be supported over a wider area by the upper end part of the airbag cushion 20, and since the airbag cushions 10 and 20 are secured so as to be loosely mated together, simultaneous stabilization of both airbag cushions 10 and 20 is more readily achieved. As a result, airbag cushions 10 and 20 when fully expanded can be further stabilized relative to each other, and can be retained even more reliably.

### Embodiment 7

Furthermore, the configuration of the Embodiment 6 can also be expressed from a different perspective as follows. In other words, when either of the occupant restraint structures 100 and 200 depicted in FIG. 2 and FIG. 3 is expanded and deployed, the upper end 20u of the airbag cushion 20 is configured to be positioned between a lower end 10d1 and the lower end 10d2 (first lower end and second lower end), each formed on the lower surface of the airbag cushion 10 in the front-back direction.

### Embodiment 8

Furthermore, as depicted in FIG. 2 and FIG. 3, in both cases when the occupant restraint structures 100 and 200 are expanded and deployed, a virtual straight line VL extending through a front end 20f and back end 20b of the airbag cushion 20 intersects with the vehicle seat S on which the occupant P is seated. In other words, as depicted in the figures, when the shape and volume of instrument panel 2 become smaller than conventionally, protrusion of instrument panel 2 toward the occupant P can naturally become smaller, and therefore the angle at which airbag cushion 20 deploys relative to the horizontal also becomes smaller (more gradual) than conventionally, tending to facilitate the configuration of the present embodiment. Therefore, the configuration of the occupant restraint structures 100 and 200 according to the present disclosure, as described in Embodiment 1 to Embodiment 7, can provide significantly superior advantages compared to conventionally as a reaction surface structure for retaining the airbag cushion 10.

### Embodiment 9

Furthermore, in both of the occupant restraint structures 100 and 200 depicted in FIG. 2 and FIG. 3, the relationship expressed by the following equation (4) is satisfied when the structure is expanded and deployed. $P 2 > P 1$

Here, P1 represents the internal pressure of the airbag cushion 10, and P2 represents the internal pressure of the airbag cushion 20. In other words, internal pressure P2 of the airbag cushion 20 is set higher than internal pressure P1 of the airbag cushion 10, so the airbag cushion 20 can more easily push the airbag cushion 10 upward against the vertical downward pressure from the airbag cushion 10. This has the advantage of more readily causing the airbag cushion 20 to function as a reaction surface for the airbag cushion 10.

### Embodiment 10

Also, each of occupant restraint structures 100 and 200 depicted in FIG. 2 and FIG. 3 are preferably configured such that expansion and deployment of the airbag cushion 10 is completed after expansion and deployment of airbag cushion 20 is completed. In this case, more specifically, according to expansion volumes of airbag cushions 10 and 20, start and end timings of gas supply into the airbag cushions 10 and 20 can be adjusted as appropriate based on gas supply amount and gas supply rate and the like from inflators 31 and 32 to airbag cushions 10 and 20. With this manner of configuration, since expansion and deployment of the airbag cushion 20 can be completed in advance before completion of expansion and deployment of the airbag cushion 10, the upper surface of the airbag cushion 20 can more readily function particularly as a reaction surface for retaining airbag cushion 10.

The embodiments described above are for ease of understanding of the present invention and are not intended to be construed as limiting the present invention. Each element provided in each embodiment and the arrangement, materials, conditions, shape, size, and the like thereof are not limited to those exemplified and can be changed as appropriate, and the configurations of each embodiment can also be combined with each other. For example, an additional airbag cushion may be provided, and in that case, the additional airbag cushion may deploy from the same area as openings 41 and 42, or from a different area. In addition, the recessed part formed in the airbag cushion 10 is not limited to the form of the recessed part 23 that is concave in the front-back direction as depicted in FIG. 2 and FIG. 3, but may be configured to be concave in the left-right direction (vehicle width direction). Furthermore, a vent mechanism for releasing internal gas to the outside may be provided on, for example, each (both) or one of the contact surfaces of the airbag cushions 10 and 20. With this manner of configuration, outflow of internal gas from airbag cushions 10 and 20 can be suppressed appropriately, and internal pressures P1 and P2 suitable for protecting the occupant P can be more easily maintained.

### Additional Considerations for Various Embodiments

### Embodiment 1

An occupant restraint structure stowed in an instrument panel installed on a front side in a vehicle cabin in order to protect an occupant in the vehicle cabin, the occupant restraint structure comprising:
a first airbag cushion that expands and deploys toward the occupant from a first opening part formed on an upper side of the instrument panel; and
a second airbag cushion that expands and deploys toward the occupant from a second opening formed on a lower side of the instrument panel, wherein
when expanded and deployed, the occupant restraint structure satisfies the relationship represented by the following formula (1): $L 2 u ≧ Lib$
where L2u is an upper end level of the second airbag cushion, and
Lib is a back-end level of the instrument panel.

### Embodiment 2

The occupant restraint structure according to Embodiment 1, wherein when expanded and deployed, a lower surface of the first airbag cushion is retained by at least a part of an upper surface of the instrument panel and at least a part of an upper surface of the second airbag cushion.

### Embodiment 3

The occupant restraint structure according to Embodiment 1 or 2, wherein, when expanded and deployed, a relationship represented by the following formula (2) is satisfied: $L 2 u = Lob \pm Δn$
where Lob is a back-end level of the first opening part, and
Δn is an absolute value of (Lob - L2u)/2.

### Embodiment 4

The occupant restraint structure according to Embodiment 1 or 2, wherein, when expanded and deployed, a relationship represented by the following formula (3) is satisfied: $L 2 u ≧ Lob$

### Embodiment 5

The occupant restraint structure according to any one of Embodiments 1 to 4, wherein, when expanded and deployed, an upper end of the second airbag cushion comes into contact with the lower surface of the first airbag cushion.

### Embodiment 6

The occupant restraint structure according to any one of Embodiments 1 to 4, wherein, when expanded and deployed, a recessed part with which an upper end of the second airbag cushion comes into contact so as to be embedded is defined in a part of the lower surface of the first airbag cushion.

### Embodiment 7

The occupant restraint structure according to Embodiment 5 or 6, wherein, when expanded and deployed, an upper end of the second airbag cushion is positioned between a first lower end and a second lower end formed on the lower surface of the first airbag cushion in a front-back direction of the upper end.

### Embodiment 8

The occupant restraint structure according to any one of Embodiments 1 to 7, wherein a virtual straight line extending through a front end and a back end of the second airbag cushion when expanded and deployed is configured to intersect a vehicle seat on which the occupant is seated.

### Embodiment 9

The occupant restraint structure according to any one of Embodiments 1 to 8, wherein, when expanded and deployed, a relationship represented by the following formula (4) is satisfied: $P 2 > P 1$
where P1 is an internal pressure of the first airbag cushion, and
P2 is an internal pressure of the second airbag cushion.

### Embodiment 10

The occupant restraint structure according to any one of Embodiments 1 to 9, wherein the occupant restraint structure is configured such that expansion and deployment of the first airbag cushion is completed after expansion and deployment of the second airbag cushion is completed.

### DESCRIPTION OF CODES

1. Vehicle cabin, 2. Instrument panel, 2b. Back end, 3. Windshield, 10. Airbag cushion (first airbag cushion), 10d1. Lower end (first lower end), 10d2. Lower end (second lower end), 20. Airbag cushion (second airbag cushion), 20b. Back end, 20f. Front end, 20u. Upper end, 23. Recessed part, 31, 32. Inflator, 41. Opening (first opening part), 41b. Back end, 42. Opening (second opening part), 100, 200. Occupant restraint structure, Db. Vehicle back direction, Dd. Vehicle down direction, Df. Vehicle front direction, Du. Vehicle up direction, H1, H2. Housing, P. Occupant, P1, P2. Internal pressure, Ph: Head part, Pj. Upper body part, Pk. Leg part, S. Vehicle seat, S1. Backrest, S2. Seat surface, VL. Virtual straight line.

## Claims

1. An occupant restraint structure stowed in an instrument panel installed on a front side in a vehicle cabin in order to protect an occupant in the vehicle cabin, the occupant restraint structure comprising:
a first airbag cushion that expands and deploys toward the occupant from a first opening part formed on an upper side of the instrument panel; and
a second airbag cushion that expands and deploys toward the occupant from a second opening formed on a lower side of the instrument panel, wherein,
when expanded and deployed, the occupant restraint structure satisfies the relationship represented by the following formula (1): $L 2 u ≧ Lib$
where L2u is an upper end level of the second airbag cushion, and
Lib is a back-end level of the instrument panel.

2. The occupant restraint structure according to claim 1, wherein, when expanded and deployed, a lower surface of the first airbag cushion is retained by at least a part of an upper surface of the instrument panel and at least a part of an upper surface of the second airbag cushion.

3. The occupant restraint structure according to claim 1 or 2, wherein, when expanded and deployed, a relationship represented by the following formula (2) is satisfied: $L 2 u = Lob \pm Δn$
where Lob is a back-end level of the first opening part, and
Δn is an absolute value of (Lob - L2u)/2.

4. The occupant restraint structure according to claim 1 or 2, wherein, when expanded and deployed, a relationship represented by the following formula (3) is satisfied: $L 2 u ≧ Lob$

5. The occupant restraint structure according to claim 1 or 2, wherein, when expanded and deployed, an upper end of the second airbag cushion comes into contact with the lower surface of the first airbag cushion.

6. The occupant restraint structure according to claim 1 or 2, wherein, when expanded and deployed, a recessed part with which an upper end of the second airbag cushion comes into contact so as to be embedded is defined in a part of the lower surface of the first airbag cushion.

7. The occupant restraint structure according to claim 1 or 2, wherein, when expanded and deployed, an upper end of the second airbag cushion is positioned between a first lower end and a second lower end formed on the lower surface of the first airbag cushion in a front-back direction of the upper end.

8. The occupant restraint structure according to claim 1 or 2, wherein a virtual straight line extending through a front end and a back end of the second airbag cushion when expanded and deployed is configured to intersect a vehicle seat on which the occupant is seated.

9. The occupant restraint structure according to claim 1 or 2, wherein, when expanded and deployed, a relationship represented by the following formula (4) is satisfied: $P 2 > P 1$
where P1 is an internal pressure of the first airbag cushion, and
P2 is an internal pressure of the second airbag cushion.

10. The occupant restraint structure according to claim 1 or 2, wherein the occupant restraint structure is configured such that expansion and deployment of the first airbag cushion is completed after expansion and deployment of the second airbag cushion is completed.
